# FASCICULE DE BREVET EUROPEEN

(11) **EP 3 913 779 B1**
(45) Date de publication et mention de la délivrance du brevet: **02.08.2023**
(21) Numéro de dépôt: 21174175.6
(22) Date de dépôt: 17.05.2021
(51) Int. Cl.: H02K 26/00, H02K 21/14, H02K 21/16, H02K 1/14, H02K 15/16

(54) **MOTOREDUCTEUR COMPORTANT UN STATOR A DOUBLE DIAMETRE**
UNTERSETZUNGSGETRIEBE, DAS EINEN STATOR MIT DOPPELTEM DURCHMESSER UMFASST
GEAR MOTOR COMPRISING A STATOR WITH DOUBLE DIAMETER

(30) Priorité: 19.05.2020 FR 2005053
(43) Date de publication de la demande: 24.11.2021
(73) Titulaire: Bontaz Centre, 74460 Marnaz (FR)
(72) Inventeur: TAUPEAU, Anthony, 74410 SAINT-JORIOZ (FR); BONNEVAY, Nicolas, 74000 ANNECY (FR); PEULMEULE, Thibaut, 74000 ANNECY (FR)
(74) Mandataire: Brevalex

(56) Documents cités:
- WO-A1-2018/096246
- WO-A1-2019/129984
- CN-A- 110 912 288

## Description

### DOMAINE TECHNIQUE ET ÉTAT DE LA TECHNIQUE ANTÉRIEURE

La présente invention se rapporte à un motoréducteur comportant un moteur sans balai et un réducteur, dont le stator présente un double diamètre, le motoréducteur offrant ainsi une fiabilité augmentée.

Dans l'industrie automobile, on utilise des vannes pilotées en tout ou rien ou proportionnellement par un motoréducteur. Ces vannes servent par exemple à gérer l'alimentation en fluide de refroidissement, en carburant, en huile...

Le motoréducteur peut comporter un rotor portant des aimants, logé dans un stator comportant des bobines. Le réducteur est logé dans le rotor. L'arbre de sortie est coaxial au rotor. Un tel motoréducteur est décrit dans le document WO2019/129984.

Ce motoréducteur présente un encombrement réduit et est ainsi adapté pour piloter des vannes, par exemple des distributeurs hydrauliques équipant des véhicules automobiles. En outre il met en oeuvre un axe de centrage qui assure le guidage, le recentrage de tous les éléments mobiles et assure également la fonction de palier de glissement pour les éléments mobiles. L'usure du réducteur est limitée.

Ce motoréducteur met en oeuvre 12 bobines entourant le rotor. On cherche à réduire le nombre de bobines, par exemple à six, voire à trois. En réduisant le nombre de bobines, celles-ci ne sont alors en regard que d'une partie de la surface radialement extérieure du rotor. Les inventeurs ont constaté que lors du fonctionnement du motoréducteur, le rotor subissait des forces de répulsion de la part des bobines sensiblement normales à l'axe de rotation. Ces forces ne s'appliquant que dans un sens, il en résulte qu'un désaxage entre l'axe du stator et l'axe de rotation du rotor pouvait apparaître, et un risque d'usure prématurée pouvait alors survenir malgré la mise en oeuvre de l'axe de centrage unique, réduisant la fiabilité du motoréducteur.

WO2018/096246 divulgue un motoréducteur, notamment destiné à une vanne de circulation d'air.

### EXPOSÉ DE L'INVENTION

C'est par conséquent un but de la présente invention d'offrir un motoréducteur dont les risques d'usure prématurée sont encore davantage réduits.

Le but énoncé ci-dessus est atteint par un motoréducteur comportant un stator, un rotor, un réducteur et un arbre de sortie. Le stator comporte un logement recevant le rotor. Le logement comportant une surface latérale en regard d'une face latérale du rotor. Le motoréducteur comporte également des bobines montées sur le stator de sorte à être en regard d'une partie d'une face latérale du rotor. En considérant un plan orthogonal à l'axe de rotation du rotor, la projection de la surface latérale dans le plan est délimitée en partie par un premier cercle ayant un premier rayon, et en partie par un deuxième cercle ayant un deuxième rayon, le deuxième rayon étant supérieur au premier rayon, et les bobines sont situées dans la zone de la surface latérale présentant le premier rayon. Ainsi on réalise une zone délimitée angulairement pour laquelle l'entrefer entre le stator et la face radiale du rotor a une valeur plus grande que celle de l'entrefer dans une zone du stator comportant les bobines. Ainsi la force d'attraction du stator sur le rotor est augmentée dans la zone angulaire de petit rayon relativement à la force d'attraction du stator sur le rotor dans la zone angulaire de plus grand rayon, ce qui a pour effet de compenser au moins en partie les efforts de répulsion exercés par les bobines.

Le désaxage du rotor en fonctionnement est donc au moins en partie réduit, voire supprimé. Les risques d'usure prématurée du motoréducteur sont donc diminués.

De manière avantageuse, l'extension angulaire du logement du stator présentant le deuxième rayon est de préférence proche ou égale de l'extension angulaire de la zone du rotor comportant les bobines.

Le rotor reste centré dans le stator mais celui-ci présente une forme composée d'un rayon principal et d'un second rayon légèrement augmenté et coaxial.

De manière très avantageuse, la zone comportant les bobines est diamétralement opposée à la zone ayant le plus grand entrefer.

L'un des objets de la présente demande est un motoréducteur comportant un moteur électrique sans balai, un réducteur planétaire et un arbre de sortie d'axe longitudinal, solidaire en rotation du réducteur planétaire, ledit moteur électrique comportant un stator, un rotor logé dans un logement du stator et entouré par une surface latérale du logement, ledit rotor étant configuré pour tourner autour d'un axe longitudinal, au moins deux bobines fixées sur le stator dans une portion de la surface latérale du logement s'étendant sur un angle α3 de sorte à être en regard d'une partie d'une surface latérale extérieure du rotor, dans lequel le stator et le rotor définissent entre eux au moins une première zone ayant un premier entrefer et une deuxième zone ayant un deuxième entrefer, le premier entrefer étant inférieur au deuxième entrefer, la première zone comprenant les bobines, de sorte que la force d'attraction exercée par le stator sur le rotor est plus faible dans la deuxième zone que dans la première zone.

De préférence, une section de ladite surface latérale du logement dans un plan orthogonal à l'axe longitudinal comporte au moins un premier arc de cercle de rayon R1 s'étendant sur un angle α1 et un deuxième arc de cercle de rayon R2 s'étendant sur un angle α2, R1 < R2, et la partie de la surface latérale du logement contenant les bobines étant contenue dans la partie de la surface latérale du logement ayant le premier arc de cercle.

Par exemple, R2-R1 est compris entre 0,2 mm et 0,5 mm.

Avantageusement, la partie de la paroi latérale du logement délimitée par le deuxième arc de cercle est diamétralement opposé à la partie de la surface latérale du logement contenant les bobines.

De manière préférée, l'angle α2 du deuxième arc de cercle est égal à l'angle α3 de la partie de la surface latérale du logement comportant les bobines.

Le motoréducteur peut comporter trois bobines ou un multiple de trois.

Le stator est par exemple monté sur une carte électronique à laquelle sont connectées les bobines.

Avantageusement, le réducteur est logé au moins en partie dans le rotor.

Selon une caractéristique additionnelle, le motoréducteur comporte un axe unique formant l'axe de rotation du rotor et l'axe du réducteur planétaire.

La présente demande a également pour objet un dispositif fluidique rotatif comportant un corps de vanne avec au moins un orifice de sortie du fluide, un noyau apte à autoriser ou interrompre l'écoulement du fluide par l'orifice de sortie et un motoréducteur selon l'invention actionnant le noyau.

### BRÈVE DESCRIPTION DES DESSINS

La présente invention sera mieux comprise sur la base de la description qui va suivre et des dessins en annexe sur lesquels:
La figure 1 est une vue en coupe longitudinale d'un exemple d'un motoréducteur selon l'invention mis en oeuvre pour actionner un distributeur hydraulique.
La figure 2 est une vue de dessus d'un exemple de stator pouvant être mis en oeuvre dans le motoréducteur de la figure 1.
La figure 3 est une vue de dessus du stator de la figure 2 muni de bobines.
La figure 4 est une vue de dessus montrant le stator de la figure 2, les bobines recouvertes par un surmoulage et un rotor.
La figure 5 est une vue en éclaté du stator avec sa carte électronique et le boîtier dans lequel il est fixé.
La figure 6 est une vue en perspective d'un exemple de cosse de connexion des bobines à la carte électronique.

### EXPOSÉ DÉTAILLÉ DE MODES DE RÉALISATION PARTICULIERS

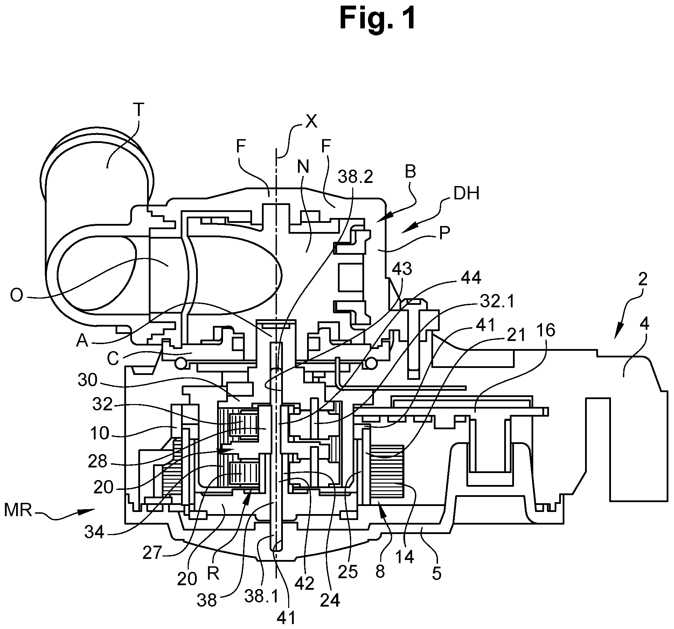

Sur la figure 1, on peut voir une vue en coupe longitudinale d'exemple d'un distributeur hydraulique DH piloté par un motoréducteur MR selon l'invention.

Le distributeur DH comporte un corps de vanne B de forme essentiellement cylindrique de révolution autour d'un axe X, et un noyau N monté dans le corps de vanne B et apte à tourner dans le corps de vanne B.

Dans l'exemple représenté, le corps de vanne B comporte un fond F et une paroi latérale cylindrique P d'un seul tenant, et un couvercle de vanne C pour fermer le corps de vanne. Le couvercle de vanne C est, par exemple, solidarisé au corps de vanne B par soudage, par exemple par soudage à ultrason.

Le corps de vanne B comporte un orifice d'alimentation (non visible) formé dans la paroi latérale P et prolongé par un conduit destiné à une connexion à une source de liquide, et au moins 2 orifices de sortie O formé également dans la paroi latérale P, se prolongeant chacun par un conduit T destiné à amener le liquide vers une zone donnée, par exemple une zone à refroidir. Le corps de vanne B définit une chambre hydraulique.

Les orifices d'entrée et de sortie sont répartis sur la paroi autour de l'axe X.

Le noyau N est monté dans la chambre hydraulique et est en prise avec l'arbre de sortie A du motoréducteur A.

Le motoréducteur s'étend le long d'un axe longitudinal X. Il comporte un carter 2 dans lequel sont logés le moteur électrique M et le réducteur planétaire R. Le carter 2 protège le moteur et le réducteur de l'environnement extérieur. Une extrémité longitudinale de l'arbre de sortie A sur laquelle le noyau est en prise faisant saillie du carter 2 par une ouverture 3.

Dans la suite de la description, l'extrémité longitudinale du motoréducteur comportant l'arbre de sortie A sera désignée « extrémité aval », l'autre extrémité longitudinale du motoréducteur sera désignée « extrémité amont ». L'orientation des différents éléments du motoréducteur par rapport à ces extrémités pourra être repérée par le terme « amont » ou « aval ».

Le carter 2 comporte un boîtier 4 et un capot 5 fermant le boîtier.

Le moteur électrique est un moteur sans balai ou brushless en terminologie anglo-saxonne, comporte un stator 8, un rotor 10 disposé dans le stator 8 et une carte électronique 16.

Le stator 8 sera décrit en détail ci-dessous.

Sur la figure 1, on peut voir une première carte électronique 16 à laquelle les broches des bobines sont connectées et qui sert à piloter le rotor. Par exemple, les bobines sont connectées électriquement et mécaniquement à la carte électronique 16 par des cosses qui sont connectées électriquement à la bobine par serrage mécanique.

Le rotor 10 est monté à l'intérieur du stator et est destiné à tourner dans le stator autour de l'axe X. Le rotor 10 comporte par exemple un aimant 21 à plusieurs pôles formant la surface extérieure du rotor et en regard des bobines.

Le rotor 10 comporte un fond formant un moyeu 20 comportant, sur une face aval, opposée à celle orientée vers le boîtier un pignon 24 formant un premier planétaire du réducteur R. Le premier planétaire 24 est donc entraîné en rotation directement par le moyeu 20.

Le réducteur comporte également une première platine porte-satellite 26 et trois premiers satellites 27 montés mobiles en rotation sur une face amont de la platine porte-satellite 26 autour d'axes parallèles à l'axe X. Les premiers satellites 27 engrènent le premier planétaire 24. Un deuxième planétaire 28 est solidaire en rotation de la première platine porte-satellite 26 et est disposé sur l'axe X sur une face aval de la première platine porte-satellite 26, opposée à la face amont portant les premiers satellites 27.

Le réducteur comporte une deuxième platine porte-satellite 30 et trois deuxièmes satellites 32 montés mobiles en rotation sur une face amont de la deuxième platine porte-satellite 30 autour d'axes 32.1 parallèles à l'axe X. Le deuxième planétaire 28 engrène les deuxièmes satellites 32.

De manière avantageuse, les satellites 27 et 32 sont identiques, ce qui permet de simplifier la fabrication du motoréducteur.

L'arbre de sortie A du motoréducteur est solidaire en rotation de la deuxième platine porte-satellite 30 et fait saillie d'une face aval de la deuxième platine porte-satellite 30 opposée à la face amont portant les deuxièmes satellites 32.

L'arbre de sortie A peut être guidé en rotation par le contour de l'ouverture 3 formée dans le couvercle.

Le réducteur comporte également un couronne dentée extérieure 34 d'axe X, disposée à l'intérieur du rotor 10 et à l'extérieur des premiers 27 et deuxièmes 32 satellites, de sorte que les satellites 27 et 32 engrènent la couronne dentée 34. Tous les éléments du réducteur sont donc disposés à l'intérieur de la couronne dentée 34. La couronne dentée 34 est fixe par rapport au carter 2.

De manière très avantageuse, la couronne dentée 34 est insérée dans le boîtier 4, par exemple par moulage. En variante, la couronne dentée 34 est fixée sur le boîtier 4 par soudage, par collage, par des vis...

De manière très avantageuse, un axe de centrage 38 unique traverse le réducteur R et le moteur M et assure le centrage des différents éléments du réducteur et du rotor 10 par rapport au stator 8. La culasse 25 comporte un passage central traversant le premier planétaire permettant le passage de l'axe de centrage 38. L'entrefer entre le rotor 10 et le stator 8 est ainsi fixé sans utiliser de palier. La suppression des paliers contribue à l'allongement de la durée de vie du motoréducteur. En outre, la réalisation du motoréducteur est simplifiée, et sa masse est réduite.

L'axe de centrage 38 est maintenu axialement et transversalement dans le motoréducteur. Pour cela, le fond intérieur du capot 5 comporte un logement 41 recevant une extrémité longitudinale 38.1 de l'axe 38, et la deuxième platine porte-satellite portant l'arbre de sortie 30 comporte également un logement 43 entre les deuxièmes satellites sur sa face amont recevant l'autre extrémité 38.2 de l'axe 38. La deuxième platine porte-satellite 30 étant guidée par le contour de l'ouverture dans le couvercle 5 via l'arbre de sortie A, l'autre extrémité de l'axe de centrage 38 est également maintenue axialement et transversalement. L'axe 38 est monté fixe dans le capot 5, par exemple l'extrémité 38.1 est montée serrée dans le logement 41 du capot 5.

En outre, le premier planétaire 24 et le deuxième planétaire 28 comportent en leur centre un passage axial 42, 44 respectivement, pour le passage de l'axe de centrage 38. Les diamètres des logements 40, 41 et des logements 42, 44 sont ajustés au diamètre de l'axe 38, afin d'assurer un maintien transversal de l'axe de centrage 38 et un bon guidage en rotation des différents éléments du réducteur.

L'axe 38 assure le guidage, le recentrage de tous les éléments mobiles et assure également la fonction de palier de glissement pour les éléments mobiles.

L'axe de centrage 38 est avantageusement en métal, par exemple en acier, avantageusement en acier inoxydable pour présenter une rigidité suffisante. Le diamètre de l'arbre peut être fixé précisément par une opération de rectification Avantageusement l'axe 38 est réalisé avec une grande précision, par exemple par usinage. Son diamètre présente avantageusement une tolérance maximale de 20 µm et une cylindricité de 5 µm.

Les jeux entre l'axe 38 qui est fixe dans le carter et les éléments mobiles sont avantageusement compris entre 20 µm et 60 µm.

Le boîtier et le couvercle sont disposés de sorte que les logements 40 et 41 assurent une coaxialité entre l'axe de centrage 38 et la couronne dentée 34.

La mise en oeuvre de l'axe de centrage fixe et la précision de positionnement, qui peut être obtenue lors de la réalisation du boîtier et du couvercle qui intègre la couronne 34 et lors de leur assemblage, permet très avantageusement de ne pas utiliser de roulement à billes entre l'arbre de centrage et les éléments mobiles en rotation autour de lui.

La mise en oeuvre de cet axe de centrage 38 permet de limiter l'usure du réducteur. En outre, il facilite l'assemblage. Il permet également, dans le cas d'éléments de réducteur en matériau plastique, d'assurer un jeu suffisant entre les éléments pour qu'ils s'engrènent correctement.

De manière avantageuse, les axes des satellites sur les platines porte-satellite, sont réalisés en acier, par exemple en acier inoxydable, pour améliorer encore davantage le guidage et éviter l'usure des dentures du réducteur planétaire.

De plus, la mise en oeuvre d'un axe unique permet de réduire sensiblement les pertes car les éléments mobiles en rotation du réducteur tournent autour de cet axe de faible diamètre.

Le motoréducteur peut comporter un capteur de position angulaire de l'arbre de sortie A.

Le stator 8 va maintenant être décrit en détail.

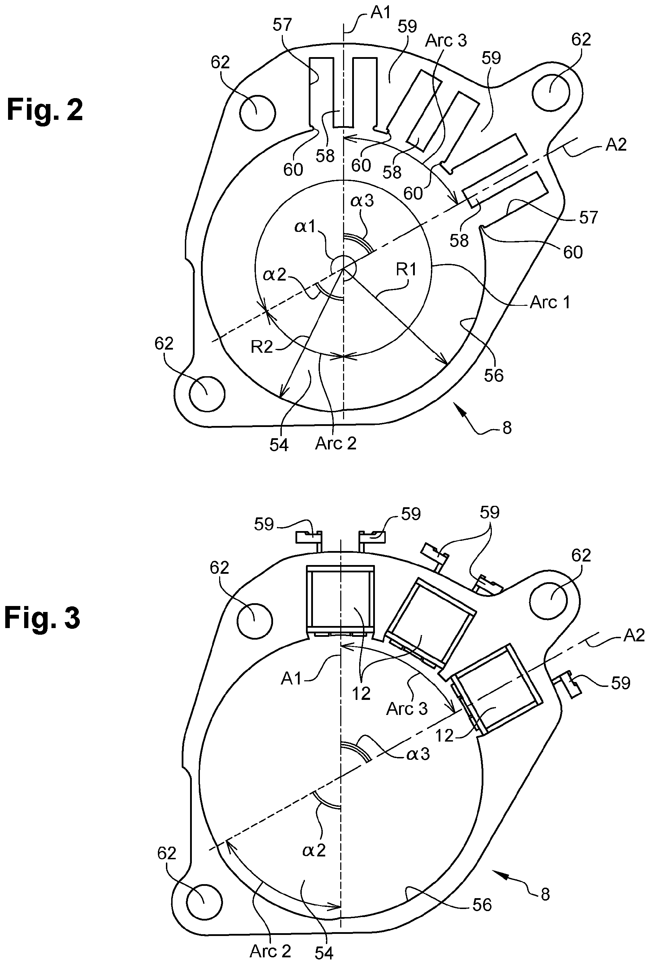

Sur la figure 2, le stator 8 est représenté seul et la figure 3 montre le stator 8 muni des bobines 12.

Le stator 8 est réalisé par exemple dans un empilement de tôles d'acier magnétique, par exemple en acier M270-35A. D'autres aciers tels que le M235-35A, M250-35A, et le M330-35A peuvent également être utilisés de manière non limitative.

Par exemple, le stator est composé de 28 tôles de 0,35mm d'épaisseur chacune. Il présente une épaisseur totale de 9,8 mm.

Le stator comporte un logement 54 destiné à loger le rotor 10; le logement 54 traverse de part en part le stator 8 sur toute son épaisseur.

Le logement 54 comporte une surface latérale extérieure 56 dont une partie est occupée par les bobines 12, cette partie est désignée « partie de bobinage ». La partie de bobinage est délimitée angulairement par deux bords d'extrémité 57 et comporte des branches 58, dans l'exemple trois branches 58, autour de chacune d'elle est assemblée un support bobiné de fil conducteur électrique de sorte à former une bobine 12.

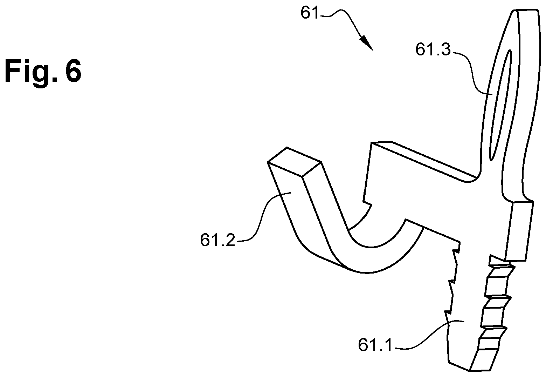

Chaque bobine comporte par exemple un corps en plastique appelé carcasse, deux cosses ou fiches de connexion, et un fil bobiné sur le corps, et connecté par ses deux extrémités aux deux cosses qui sont destinées à être connectées à la carte électronique. Le corps de chaque bobine est monté sur une branche 58. De manière avantageuse, chaque cosse 61 (figure 6) comporte un élément de fixation 61.1 à la carcasse, par exemple il comporte des dents surs ses flancs latéraux de sorte à présenter une forme de harpon ; l'élément de fixation est inséré dans la carcasse. La cosse comporte également un élément de connexion 61.2 à une extrémité du fil, par exemple il s'agit d'un élément comprenant deux lames formant un V qui sont rapprochées pour pincer l'extrémité du fil, une soudure est ensuite avantageusement réalisée. La cosse comporte également un élément de montage et de connexion 61.3 à la carte électronique, l'élément de montage et de connexion 61.3 est par exemple inséré à force dans un logement de la carte électronique. La cosse est en matériau conducteur électrique.

La partie de bobinage comporte également deux éléments radiaux 59, s'étendant chacune entre deux bobines. En outre la partie de bobinage comporte avantageusement des moyens assurant le maintien radial des bobines. Dans l'exemple représenté, les extrémités libres des éléments radiaux 59 et des bords d'extrémité 57 comportent des dents 60 assurant un maintien radial des bobines 12 par encliquetage. Dans cet exemple deux dents 60 pas bobines sont mises en oeuvre.

Dans l'exemple représenté, la partie de bobinage est définie par l'angle entre les axes des bobines situées le plus à l'extérieur i.e. sensiblement l'angle entre les branches 58 sur lesquelles les bobines 12 sont insérées.

Les branches 58, les éléments radiaux 59 et les dents 60 sont découpées comme le logement, par exemple par frappe à froid.

Dans l'exemple représenté et de préférence, le moteur électrique est un moteur triphasé comportant un nombre de bobines 12 multiple de trois réparties. Néanmoins un moteur biphasé, et plus généralement polyphasé, ne sort pas du cadre de la présente invention.

Sur la figure 3, on peut voir les bobines 12 formées autour des branches 58 et les fiches de connexion 61 destinées à l'alimentation des bobines, ces fiches sont connectées à la carte électronique 16.

La section de la surface latérale du logement selon un plan orthogonal à l'axe de rotation du rotor 8 présente un premier arc de cercle Arc1 d'angle α1 et de rayon R1 et un deuxième arc de cercle Arc2 d'angle α2 et de rayon R2, R2 > R1.

L'angle entre les axes A1 et A2 des bobines extérieures 12 est désigné α3.La partie de la surface latérale du logement délimitée par le premier arc de cercle Arc1 comprend la partie de bobinage.

La partie de bobinage s'étend sur un angle α3 < α1.

La différence de rayon R2-R1 ne résulte pas des imprécisions de fabrication. Par exemple, la différence R2-R1 est égale à 0,25mm pour une imprécision de 0,03mm. De préférence, 0,2 mm < R2-R1 < 0,5 mm. Par exemple, R2- R1 = 0, 25 m, R2 = 19,2 5mm et R rotor =18,5 mm.

Par exemple, dans le cas d'un stator à trois bobines, α1 = 300° et α2 = 60°. Par exemple, les axes de deux bobines consécutives sont disposés à 30° l'un par rapport à l'autre. Dans le cas d'un stator à 6 bobines, α2 : 120° et α1 = 180°.

Le premier arc de cercle Arc1 est relié au deuxième arc de cercle Arc2 par exemple par des portions de droite inclinées par rapport à la direction radiale du stator.

Le rotor 10 est logé dans le logement 54 du stator 8, une partie des aimants du stator étant en regard des bobines 12.

Du fait des arcs de cercle de rayon différent, la valeur de l'entrefer entre la surface radialement extérieure du rotor 8 et la surface latérale 56 du logement 54 varie. Dans l'exemple représenté, l'entrefer présente sensiblement deux valeurs : une première valeur E1 entre la paroi radialement extérieure du rotor 10 et la partie de la surface latérale 56 du logement 54 délimitée par le premier arc de cercle Arc1, et une deuxième valeur E2 entre la paroi radialement extérieure du rotor 8 et la partie de la surface latérale 56 du logement 54 délimitée par le deuxième arc de cercle Arc2. La première valeur d'entrefer E1 est inférieure à la deuxième valeur d'entrefer E2. Par exemple 0,2 mm < E1 < 0,5 mm, par exemple égale à 0,5 mm, et 0, 75 mm < E2 < 1 mm, par exemple égale à 0, 75 mm. De préférence, E1 est choisi le plus faible possible.

Ainsi, puisque la force d'attraction exercée par le stator 8 sur le rotor 10 est proportionnelle à la distance les séparant, cette force d'attraction varie en suivant le contour de la surface latérale 56 du logement 54. La force d'attraction est plus grande lorsque l'entrefer est plus faible, elle est donc plus grande pour la première valeur d'entrefer, i.e. le long de l'arc de cercle Arc3, que pour la deuxième valeur d'entrefer, i.e. le long de l'arc de cercle Arc2.

Le stator comporte également des trous 62 sur le boîtier B traversés par des vis 63 de fixation du stator au boîtier 4.

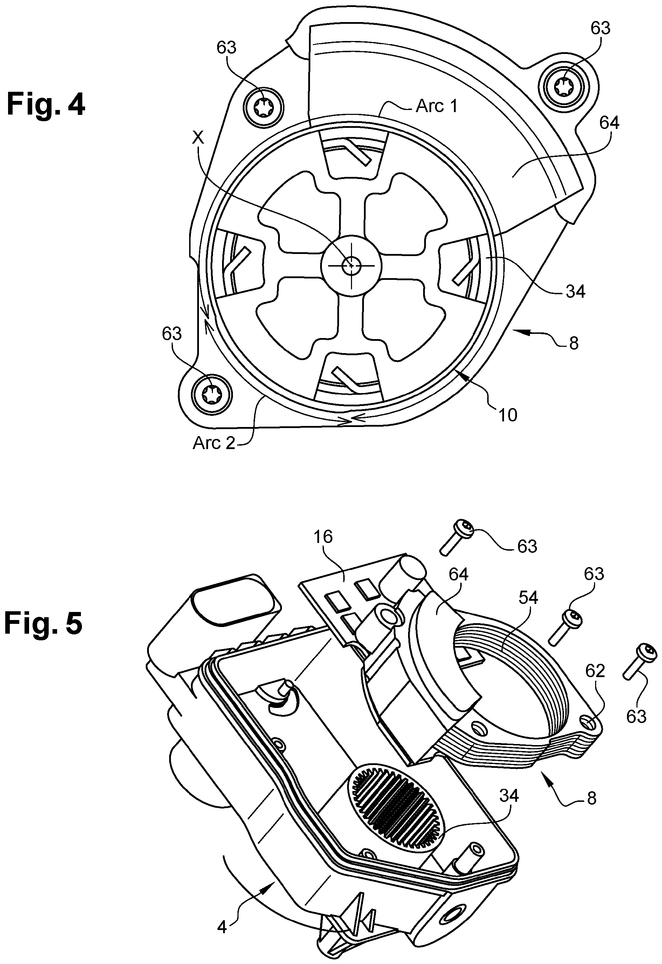

Sur la figure 5, on peut voir vue de dessus une partie du motoréducteur montrant le stator, les bobines recouvertes de plastique surmoulé 64, la carte électronique 16 à laquelle sont connectées les bobines 12, le boîtier 4 et la couronne dentée 34 du réducteur.

La figure 5 est une vue en éclaté de la partie du motoréducteur de la figure 4.

Le fonctionnement du moteur électrique est le suivant :
Les bobines 12 sont alimentées en courant électrique de manière déphasée, lorsqu'une bobine est alimentée, une force de répulsion s'exerce entre la bobine 12 et la partie de l'aimant en regard porté par le rotor, ce qui a tendance à désaxer le rotor 10 par rapport à son axe de rotation.

De manière permanente une force d'attraction s'exerce entre le stator 8 et le rotor 10. Grâce à l'invention, on augmente l'amplitude de la force d'attraction du stator 8 sur le rotor 10 au niveau de la portion du stator comportant les bobines 12 relativement à la portion du stator 8 sans bobine, ce qui permet de compenser au moins en partie la force de répulsion entre les bobines 12 et le rotor 10, et donc de réduire au moins en partie le désaxage du rotor. Il en résulte que les risques de frottement entre le rotor 10 et le stator 8 sont réduits ainsi que les risques d'endommagement par exemple sur le réducteur du fait de ce désaxage.

De préférence, les angles α2 et α3 sont égaux ou sensiblement égaux, ainsi la longueur du deuxième arc de cercle Arc2 qui est égale à 2πR2×α2/180 a une valeur très proche de celle de la longueur de l'arc de cercle de la partie de bobinage Arc3, qui est égale à 2πR1×α3/180, pour α2 et α3 en degrés, par exemple la longueur de l'Arc2 est égale à 40,3 mm, et la longueur de l'Arc2 est égale à 39,8 mm.

Ainsi la longueur de la zone sur laquelle la force d'attraction entre le rotor 10 et le stator 8 est réduite est sensiblement égale à la longueur de la zone sur laquelle les bobines 12 exercent leurs forces de répulsion sur le rotor 10.

De manière préférée, la partie de bobinage α3 est diamétralement opposée à la partie de la surface délimitée par le deuxième arc de cercle Arc2 ; comme cela est visible sur la figure 3. Ainsi les forces de répulsion exercées par les bobines sur le rotor s'exercent sur une zone diamétralement opposée à la zone présentant une force d'attraction réduite. Le désaxage du rotor est ainsi encore réduit.

La forme extérieure du stator n'est pas limitative, elle est choisie en fonction de l'environnement du moteur et des possibilités de fabrication.

Le motoréducteur est appliqué dans la description à la commande d'un distributeur hydraulique, mais il sera compris qu'il peut être utilisé pour actionner tout autre dispositif.

## Revendications

1. Motoréducteur comportant un moteur électrique sans balai, un réducteur planétaire (R) et un arbre de sortie (A) d'axe longitudinal (X), solidaire en rotation du réducteur planétaire (R), ledit moteur électrique (M) comportant un stator (8), un rotor (10) logé dans un logement (54) du stator (8) et entouré par une surface latérale (56) du logement (54), ledit rotor (10) étant configuré pour tourner autour d'un axe longitudinal (X), au moins deux bobines (12) fixées sur le stator dans une portion de la surface latérale (56) du logement (54) s'étendant sur un angle α3 de sorte à être en regard d'une partie d'une surface latérale extérieure du rotor (10),
**caractérisé en ce que** le stator (8) et le rotor (10) définissent entre eux au moins une première zone (Arc1) ayant un premier entrefer et une deuxième zone (Arc2) ayant un deuxième entrefer, le premier entrefer étant inférieur au deuxième entrefer, la première zone (Arc1) comprenant les bobines (12), de sorte que la force d'attraction exercée par le stator (8) sur le rotor (10) est plus faible dans la deuxième zone (Arc2) que dans la première zone (Arc1).

2. Motoréducteur selon la revendication 1, dans lequel une section de ladite surface latérale (56) du logement dans un plan orthogonal à l'axe longitudinal (X) comporte au moins un premier arc de cercle (Arc1) de rayon R1 s'étendant sur un angle α1 et un deuxième arc de cercle (Arc2) de rayon R2 s'étendant sur un angle α, R1 < R2, et la partie de la surface latérale (56) du logement (54) contenant les bobines (12) étant contenue dans la partie de la surface latérale (56) du logement (54) ayant le premier arc de cercle (arc1).

3. Motoréducteur selon la revendication 1 ou 2, dans lequel R2-R1 est compris entre 0,2 mm et 0,5 mm.

4. Motoréducteur selon la revendication 1, 2 ou 3, dans lequel la partie de la paroi latérale (56) du logement (54) délimitée par le deuxième arc de cercle (Arc2) est diamétralement opposé à la partie de la surface latérale (56) du logement (54) contenant les bobines (12).

5. Motoréducteur selon l'une des revendications 1 à 4, dans lequel l'angle α2 du deuxième arc de cercle (Arc2) est égal à l'angle α3 de la partie de la surface latérale (56) du logement (54) comportant les bobines (12).

6. Motoréducteur selon l'une des revendications 1 à 5, comportant trois bobines (12) ou un multiple de trois.

7. Motoréducteur selon l'une des revendications 1 à 6, dans lequel le stator (8) est monté sur une carte électronique (16) à laquelle sont connectées les bobines (12).

8. Motoréducteur selon l'une des revendications 1 à 7, dans lequel le réducteur (R) est logé au moins en partie dans le rotor (10).

9. Motoréducteur selon l'une des revendications 1 à 8, comportant un axe unique formant l'axe de rotation du rotor et l'axe du réducteur planétaire.

10. Dispositif fluidique rotatif comportant un corps de vanne avec au moins un orifice de sortie du fluide, un noyau apte à autoriser ou interrompre l'écoulement du fluide par l'orifice de sortie et un motoréducteur selon l'une des revendications précédentes actionnant le noyau.

## Patentansprüche

1. Untersetzungsgetriebe, einen bürstenlosen Elektromotor beinhaltend, ein Planetengetriebe (R) und eine Abtriebswelle (A) der Längsachse (X), die drehfest mit dem Planetengetriebe (R) verbunden ist, wobei der Elektromotor (M) einen Stator (8) beinhaltet und einen Rotor (10), der in einem Sitz (54) des Stators (8) untergebracht ist, und von einer seitlichen Oberfläche (56) des Sitzes (54) umgeben ist, wobei der Rotor (10) konfiguriert ist, um sich um eine Längsachse (X) zu drehen, wobei mindestens zwei Spulen (12), die am Stator in einem Abschnitt der seitlichen Oberfläche (56) des Sitzes (54) befestigt sind, sich in einem Winkel α3 erstrecken, so dass sie einem Bereich einer äußeren seitlichen Oberfläche des Rotors (10) zugewandt sind,
**dadurch gekennzeichnet, dass** der Stator (8) und der Rotor (10) zwischen sich mindestens eine erste Zone (Arc1) definieren, die einen ersten Luftspalt aufweist, und eine zweite Zone (Arc2), die einen zweiten Luftspalt aufweist, wobei der erste Luftspalt kleiner ist als der zweite Luftspalt, wobei die erste Zone (Arc1) die Spulen (12) umfasst, so dass die vom Stator (8) auf den Rotor (10) ausgeübte Anziehungskraft in der zweiten Zone (Arc2) schwächer ist als in der ersten Zone (Arc1).

2. Untersetzungsgetriebe nach Anspruch 1, wobei ein Teil der seitlichen Oberfläche (56) des Sitzes in einer Ebene orthogonal zur Längsachse (X) mindestens einen ersten Kreisbogen (Arc1) mit dem Radius R1 beinhalt, der sich über einen Winkel α1 erstreckt, und einen zweiten Kreisbogen (Arc2) mit dem Radius R2, der sich über einen Winkel α, R1 < R2 erstreckt, und wobei der Bereich der seitlichen Oberfläche (56) des Sitzes (54), der die Spulen (12) enthält, im Bereich der seitlichen Oberfläche (56) des Sitzes (54) enthalten ist, der den ersten Kreisbogen (arc1) aufweist.

3. Untersetzungsgetriebe nach Anspruch 1 oder 2, wobei R2-R1 zwischen 0,2 mm und 0,5 mm liegt.

4. Untersetzungsgetriebe nach Anspruch 1, 2 oder 3, wobei der Bereich der seitlichen Wand (56) des Sitzes (54), der durch den zweiten Kreisbogen (Arc2) begrenzt wird, dem Bereich der seitlichen Oberfläche (56) des Sitzes (54), der die Spulen (12) enthält, diametral gegenüberliegt.

5. Untersetzungsgetriebe nach einem der Ansprüche 1 bis 4, wobei der Winkel α2 des zweiten Kreisbogens (Arc2) gleich dem Winkel α3 des Bereichs der seitlichen Oberfläche (56) des Sitzes (54) ist, der die Spulen (12) beinhaltend.

6. Untersetzungsgetriebe nach einem der Ansprüche 1 bis 5, drei Spulen (12) beinhaltend oder ein Vielfaches von drei.

7. Untersetzungsgetriebe nach einem der Ansprüche 1 bis 6, wobei der Stator (8) auf einer Elektronikplatine (16) montiert ist, mit der die Spulen (12) verbunden sind.

8. Untersetzungsgetriebe nach einem der Ansprüche 1 bis 7, wobei das Getriebe (R) mindestens teilweise im Rotor (10) untergebracht ist.

9. Untersetzungsgetriebe nach einem der Ansprüche 1 bis 8, eine einzige Achse beinhaltend, die die Rotationsachse des Rotors und die Achse des Planetengetriebes bildet.

10. Drehbare fluidische Vorrichtung, einen Ventilkörper mit mindestens einer Fluidauslassöffnung beinhaltend, einen Kern, der geeignet ist, den Fluidfluss durch die Auslassöffnung zuzulassen oder zu unterbrechen, und ein Untersetzungsgetriebe nach einem der vorhergehenden Ansprüche, das den Kern betätigt.

## Claims

1. A gear motor including a brushless electric motor, a planetary gear unit (R) and an output shaft (A) with a longitudinal axis (X), rotatably integral with the planetary gear unit (R), said electric motor (M) including a stator (8), a rotor (10) housed in a housing (54) of the stator (8) and surrounded by a side surface (56) of the housing (54), said rotor (10) being configured to rotate about a longitudinal axis (X), at least two coils (12) attached to the stator in a portion of the side surface (56) of the housing (54) extending over an angle α3 so as to face a part of an external side surface of the rotor (10),
**characterised in that** the stator (8) and the rotor (10) define at least a first zone (Arc1) having a first air gap and a second zone (Arc2) having a second air gap therebetween, the first air gap being smaller than the second air gap, the first zone (Arc1) comprising the coils (12), so that the attraction force exerted by the stator (8) on the rotor (10) is weaker in the second zone (Arc2) than in the first zone (Arc1).

2. The gear motor according to claim 1, wherein a cross-section of said side surface (56) of the housing in a plane orthogonal to the longitudinal axis (X) includes at least a first arc of circle (Arc1) with a radius R1 extending over an angle α1 and a second arc of circle (Arc2) with a radius R2 extending over an angle α, R1 < R2, and the part of the side surface (56) of the housing (54) containing the coils (12) being contained in the part of the side surface (56) of the housing (54) having the first arc of circle (arc1).

3. The gear motor according to claim 1 or 2, wherein R2-R1 is between 0.2 mm and 0.5 mm.

4. The gear motor according to claim 1, 2 or 3, wherein the part of the side wall (56) of the housing (54) delimited by the second arc of circle (Arc2) is diametrically opposite to the part of the side surface (56) of the housing (54) containing the coils (12).

5. The gear motor according to any of claims 1 to 4, wherein the angle α2 of the second arc of circle (Arc2) is equal to the angle α3 of the part of the side surface (56) of the housing (54) including the coils (12).

6. The gear motor according to any of claims 1 to 5, including three or a multiple of three coils (12).

7. The gear motor according to any of claims 1 to 6, wherein the stator (8) is mounted to an electronic board (16) to which the coils (12) are connected.

8. The gear motor according to any of claims 1 to 7, wherein the gear unit (R) is at least partly housed in the rotor (10).

9. The gear motor according to any of claims 1 to 8, including a single axis forming the axis of rotation of the rotor and the axis of the planetary gear unit.

10. A rotating fluidic device including a valve body with at least one fluid outlet port, a core capable of allowing or interrupting fluid flow through the outlet port and a gear motor according to one of the preceding claims actuating the core.
